# FASCICULE DE BREVET EUROPEEN

(11) **EP 0 561 703 B1**
(45) Date de publication et mention de la délivrance du brevet: **16.08.1995**
(21) Numéro de dépôt: 93400686.7
(22) Date de dépôt: 17.03.1993
(51) Int. Cl.: F16F 13/00

(54) **Perfectionnements aux dispositifs antivibratoires hydrauliques**
Verbesserungen an hydraulischen schwingungsdämpfenden Vorrichtungen
Improvements to hydraulic anti-vibration devices

(30) Priorité: 20.03.1992 FR 9203392
(43) Date de publication de la demande: 22.09.1993
(73) Titulaire: HUTCHINSON, F-75008 Paris (FR)
(72) Inventeur: Gennesseaux, André, F-45120 Chalette Sur Loing (FR)
(74) Mandataire: Picard, Jean-Claude Georges

(56) Documents cités:
- EP-A- 0 440 536
- GB-A- 2 164 416

## Description

L'invention est relative aux dispositifs antivibratoires hydrauliques destinés à être interposés aux fins d'amortissement et de liaison, voire de support, entre deux éléments rigides tels qu'un châssis de véhicule et que le moteur de ce véhicule.

Elle concerne plus particulièrement, parmi ces dispositifs, ceux qui comprennent :
- une armature rigide annulaire solidarisable avec l'un des deux éléments à réunir,
- une tête rigide solidarisable avec l'autre élément,
- une paroi annulaire en élastomère, de préférence tronconique et évasée vers le bas, offrant une bonne résistance à la compression axiale et reliant de façon étanche l'armature à la tête,
- une membrane flexible étanche portée par l'armature annulaire et définissant avec elle, avec la paroi et avec la tête, une enceinte étanche,
- une cloison rigide et étanche portée par l'armature à l'intérieur de l'enceinte et séparant cette dernière en une chambre de travail, du côté de la paroi et une chambre de compensation, du côté de la membrane,
- un passage étranglé, de préférence évidé dans la cloison rigide, faisant communiquer en permanence les deux chambres entre elles,
- une masse de liquide remplissant les deux chambres et le passage étranglé,
- un piston rigide monté sur l'une des deux pièces constituées par l'armature et par la tête -pièce appelée "première pièce" dans ce qui suit- de façon à pouvoir se déplacer avec une amplitude de débattement limitée par rapport à cette première pièce,
- et un organe excitateur électrique monté sur ladite première pièce et propre à appliquer sur le piston des forces alternatives tendant à atténuer les vibrations transmises de la seconde à la première pièce.

Comme on le sait, avec un tel dispositif :
- les oscillations de relativement grande amplitude (savoir supérieure à 0,5 mm) et de relativement basse fréquence (savoir de l'ordre de 5 à 15 Hz) telles que celles dues au "hachis" engendré sur le véhicule par les cahots de la route ont pour effet de refouler le liquide de l'une des deux chambres dans l'autre et inversement à travers le passage étranglé, avec mise en résonance de la masse liquide ainsi refoulée lorsque la fréquence desdites oscillations atteint une valeur prédéterminée qui est fonction du rapport entre la longueur axiale et la section droite du passage étranglé, cette mise en résonance assurant un excellent amortissement des oscillations concernées,
- les vibrations de relativement petite amplitude (inférieure à 0,5 mm) et de relativement haute fréquence (généralement comprise entre 20 et 200 Hz), telles que celles dues au fonctionnement du moteur se traduisent par des vibrations "naturelles" du piston susceptibles d'atténuer ou filtrer la transmission des vibrations en cause,
- l'application des forces électriques d'atténuation sur le piston est effectuée de façon telle que ces forces font subir à ce piston des "contre-vibrations" artificielles déphasées par rapport à ses vibrations naturelles et tendant à supprimer en définitive toute vibration au niveau de la première pièce : cet effet atténuateur ou filtrant des vibrations est parfois désigné sous l'appellation "atténuation active".

Dans les modes de réalisation des dispositifs du genre en question, connus par exemple par EP-A-0 440 536, quand on désire réduire le volume de la chambre de travail pour augmenter la pression hydraulique qui y règne, le piston est sollicité par l'organe excitateur dans un sens qui tend à "soulever" les masses mobiles du dispositif, c'est-à-dire dans un sens tel que le centre de gravité de ces masses mobiles soit déplacé vers le haut : ce sens correspond à un déplacement du piston vers le haut si l'axe du dispositif est vertical, avec sa tête en haut, et si la première pièce est constituée par l'armature annulaire de ce dispositif.

Dans ces conditions, si l'on considère la force globale appliquée sur la première pièce par chaque déplacement du piston dû à l'excitateur électrique, force qui fait intervenir, d'une part, la force de pression hydraulique H développée pour repousser le liquide et, d'autre part, la force d'inertie I des masses mobiles, on constate que la force I vient en permanence en déduction de la force H.

Par conséquent, lorsque ces deux forces H et I sont égales, ce qui intervient pour une valeur donnée f₀ de la fréquence des oscillations imposées au piston, leur résultante est nulle.

En d'autres termes, pour cette valeur f₀, on observe un zéro d'efficacité au niveau de la première pièce : aucune atténuation active au sens défini ci-dessus ne peut alors être réalisée à l'aide de l'excitateur sur cette armature.

Pour les dispositifs du genre considéré dont l'axe est vertical, dont la tête est disposée en haut et dont la première pièce est l'armature annulaire, il en est différemment au niveau de ladite tête : avec un tel dispositif, on pourrait rendre possible et efficace une atténuation active même pour la fréquence f₀ définie ci-dessus en choisissant comme élément rigide dans lequel doivent être supprimées les vibrations celui qui est solidarisé avec la tête de l'amortisseur et non pas celui qui est solidarisé avec son armature annulaire.

Mais dans le cas le plus général des constructions ci-dessus décrites, c'est l'inverse que l'on observe, l'élément rigide dans lequel on désire supprimer les vibrations étant en général la carrosserie du véhicule solidarisée avec l'armature annulaire.

Une telle situation peut présenter un grave inconvénient.

C'est ainsi que si l'on désire remplacer, sur un véhicule donné, par un support antivibratoire perfectionné du genre ci-dessus, un support classique pour lequel la portion à protéger des vibrations est l'armature annulaire, il faut "retourner" le support perfectionné et mettre au point de nouvelles liaisons.

La présente invention a pour but, entre autres, de remédier à cet inconvénient en inversant le sens de déplacement du piston mobile afin de changer le signe du terme d'inertie dû au déplacement de ce piston.

De la sorte, la force d'inertie I du piston s'additionne à la force H de la pression hydraulique au lieu de venir en déduction de celle-ci et l'on n'observe plus de zéro d'efficacité.

Pour obtenir ce résultat, on agence et monte le piston de façon telle que la pression hydraulique dans la chambre de travail augmente pour un déplacement dudit piston se traduisant par un déplacement du centre de gravité des masses mobiles non plus vers le haut, mais vers le bas.

Plus précisément, les dispositifs antivibratoires hydrauliques du genre en question selon l'invention sont essentiellement caractérisés en ce qu'ils comprennent, immergée dans la chambre de travail, une capsule étanche remplie d'air essentiellement délimitée par une paroi rigide solidaire de la première pièce et par le piston lui-même, dont le pourtour est raccordé à ladite paroi rigide à l'aide d'un joint annulaire étanche et déformable, ledit piston étant disposé axialement entre ladite paroi rigide et une autre partie de la première pièce avec interposition d'un espace rempli de liquide faisant partie de la chambre de travail.

Dans des modes de réalisation préférés, on a recours en outre à l'une et/ou à l'autre des dispositions suivantes :
- la capsule est mise à l'air libre,
- la paroi rigide de la capsule comprend une portion pleine centrale entourée par une entretoise annulaire rigide perforée solidaire de la première pièce et c'est la zone annulaire de liaison entre la portion centrale et l'entretoise qui est raccordée de façon étanche au pourtour du piston, alors constitué lui-même par un plateau rigide plein,
- l'entretoise annulaire est une rondelle plate,
- l'entretoise annulaire est une bague cylindrique,
- le dispositif comprend, en plus de la capsule définie ci-dessus, au moins une autre capsule disposée entre la première et ladite autre partie de la première pièce avec interposition d'un espace rempli de liquide faisant partie de la chambre de travail, chaque autre capsule étant délimitée par une autre paroi rigide solidaire de la première pièce et par un autre piston solidaire du premier piston, dont le pourtour est raccordé à ladite autre paroi rigide à l'aide d'un autre joint annulaire étanche et déformable, ledit autre piston étant disposé axialement entre ladite autre paroi rigide et ladite autre partie de la première pièce avec interposition d'un espace rempli de liquide faisant partie de la chambre de travail,
- l'organe excitateur électrique est d'un type électromagnétique à réductance variable et le piston est solidarisé avec des portions relativement lourdes des circuits magnétiques constituant cet excitateur, portions comprenant notamment les bobines d'excitation électrique,
- le piston est disposé au-dessus de l'organe excitateur et la face inférieure, du piston, qui est en contact avec le liquide de la chambre de travail, présente une forme généralement tronconique convergente vers le bas,
- la base de la paroi élastique annulaire s'étend plus bas que le piston,
- l'organe excitateur électrique est logé dans la capsule.

L'invention comprend, mises à part ces dispositions principales, certaines autres dispositions qui s'utilisent de préférence en même temps et dont il sera plus explicitement question ci-après.

Dans ce qui suit, l'on va décrire quelques modes de réalisation préférés de l'invention en se référant aux dessins ci-annexés d'une manière bien entendu non limitative.

Les figures 1 et 2, de ces dessins, montrent respectivement en coupe axiale et en coupe transversale partielle selon II-II figure 1, un support antivibratoire hydraulique établi selon l'invention.

La figure 3 montre en coupe axiale partielle une variante d'un tel support conforme également à l'invention.

La figure 4 montre semblablement à la figure 1 une variante d'une portion du support selon cette figure, également conforme à l'invention.

La figure 5 montre en coupe axiale une autre variante conforme à l'invention d'un tel support.

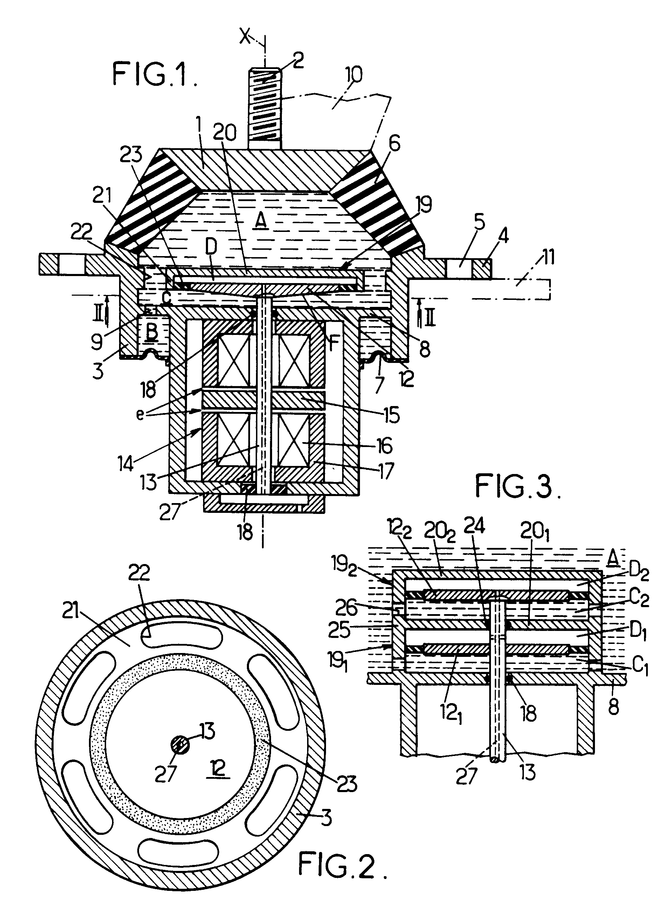

D'une façon connue en soi, le support considéré schématisé sur les figures 1 et 2 comprend :
- une tête rigide 1 constituée par un plot central prolongé vers le haut par un goujon de fixation 2 en attente,
- un anneau rigide 3 prolongé vers l'extérieur par deux pattes 4 elles-mêmes perforées par des trous de fixation 5,
- une paroi tronconique épaisse en caoutchouc 6 évasée vers le bas et présentant une bonne résistance à la compression axiale de façon à jouer un rôle de "support", ladite paroi reliant de façon étanche l'anneau 3 à la tête 1,
- un soufflet mince et flexible 7 relié de façon étanche à l'anneau 3 et délimitant un boîtier fermé avec cet anneau, la paroi 6 et la tête 1,
- une cloison rigide 8 divisant ledit boîtier en deux chambres, savoir une chambre de travail A du côté de la paroi 6 et une chambre de compensation B du côté du soufflet 7,
- un passage étranglé 9 reliant les deux chambres A et B entre elles, passage ici évidé dans la périphérie de la cloison 8,
- et une masse de liquide L remplissant les deux chambres et le passage étranglé.

L'ensemble du support est de révolution ou sensiblement de révolution autour d'un axe X, la tête rigide 1 supporte un moteur à combustion interne 10 de véhicule et l'anneau rigide 3 est monté sur le châssis 11 de ce véhicule.

Comme on le sait, les oscillations de relativement basse fréquence et grande amplitude appliquées entre l'anneau 3 et la tête 1 se traduisent par un refoulement alternatif à la même fréquence du liquide L de l'un des deux compartiments A et B dans l'autre et inversement à travers le passage 9 et la colonne de liquide oscillante contenue dans ce passage est le siège d'un phénomène de résonance lorsque ladite fréquence atteint une valeur prédéterminée qui dépend des cotes dudit passage, ce phénomène ayant pour effet d'amortir la transmission des oscillations d'origine entre la tête et l'anneau.

D'une façon également connue en soi, le support considéré comprend en outre un piston 12 dont une face F baigne dans la chambre de travail A, piston solidarisé avec l'organe mobile ou "tige" 13 d'un excitateur électrique 14.

Cet excitateur est agencé de façon à exercer sur le piston 12 une "atténuation active" au sens défini ci-dessus et comprend à cet effet :
- un élément ferromagnétique 15, de préférence feuilleté, solidaire de l'organe mobile 13, ici constitué par une tige d'axe X,
- au moins une bobine électrique 16 reliée à des circuits d'excitation appropriés (non représentés) et montée dans une carcasse 17 solidaire de la cloison 8 de façon à créer un circuit magnétique se refermant à travers l'élément 15 et des entrefers e de faible épaisseur,
- et des moyens, tels que des joints d'étanchéité 18, interposés entre la tige 13 et des paliers appropriés, pour rendre possibles les déplacements axiaux de ladite tige tout en isolant du liquide L l'élément ferromagnétique 15.

Dans les modes de réalisation actuellement connus des supports du genre décrit ci-dessus, la face, du piston actionnable par l'excitateur, qui est en contact avec le liquide, est sa face supérieure (voir le document EP-A-0 440 536).

Il faut donc le soulever pour comprimer le liquide contenu dans la chambre de travail et lors de ce soulèvement le piston entraîne avec lui un peu de liquide vers le haut.

Dans ces conditions, la force globale appliquée sur l'anneau 3 par tout déplacement forcé du piston dû à l'excitateur peut être considérée comme la différence entre la force hydraulique H due à la compression du liquide et la force d'inertie I des masses mobiles (piston, équipage lié à ce piston et liquide entraîné par lui).

Ladite force d'inertie I est liée à la fréquence d'oscillation du piston et, pour une valeur donnée f₀ de cette fréquence, les deux forces H et I sont égales.

En d'autres termes, pour cette fréquence f₀, même si le piston se déplace encore effectivement, les résultats des efforts dus à ces déplacements sur l'armature 3 sont nuls et il n'est pas possible d'exercer une atténuation active efficace.

Pour écarter cet inconvénient, selon l'invention, on inverse le sens de déplacement du centre de gravité des masses mobiles afin de changer le signe de la force d'inertie.

De cette manière, cette force s'ajoute à la force de pression hydraulique au lieu de s'en soustraire et il n'y a plus de zéro d'efficacité.

Pour le présent mode de réalisation, la pression hydraulique dans la chambre de travail doit donc augmenter non plus pour un déplacement du piston vers le haut, mais pour un déplacement de ce piston vers le bas.

A cet effet, comme bien visible sur la figure 1, le piston 12 est encore monté à l'extrémité supérieure de la tige 13, mais sa face F en contact avec le liquide L de la chambre de travail A est maintenant sa face inférieure.

Pour obtenir un tel montage, on a recours à une capsule étanche 19 remplie d'air et immergée dans la chambre de travail A, capsule délimitée supérieurement par une paroi horizontale rigide 20 et inférieurement par le piston 12 lui-même, ce dernier étant disposé entre la paroi 20 et l'excitateur 14 avec interposition d'un espace annulaire C faisant partie de la chambre de travail A et rempli de liquide.

La paroi 20 se présente sous la forme d'un disque plein solidarisé avec l'anneau 3 par l'intermédiaire de bras appropriés ou d'une rondelle périphérique 21 évidée par une couronne de lumières 22 en forme de haricots.

Les différents orifices 22 ou autres pratiqués dans le pourtour de la paroi 20 présentent une section suffisante pour que la communication soit libre entre l'espace C et le volume supérieur constituant la portion essentielle de la chambre A.

Le piston 12 est lui-même constitué par un plateau circulaire dont le pourtour est relié de façon étanche à la paroi 20, notamment au niveau de la rondelle 21, par l'intermédiaire d'un joint souple annulaire 23.

Si le volume intérieur de la poche D intérieure à la capsule 19 est petit, comme c'est le cas dans le mode de réalisation illustré, il est avantageusement mis à l'air libre, à travers un canal 27 évidé par exemple dans la tige 13, comme représenté, ou dans successivement la paroi fixe de la capsule 19 et son entourage : cette mesure empêche que les déplacements du piston créent dans le volume d'air contenu dans la poche D des variations de pression susceptibles d'altérer le fonctionnement.

Avec un tel mode de réalisation, comme bien visible sur la figure 1, les déplacements du piston 12 qui se traduisent par une augmentation de la pression hydraulique régnant dans la chambre A sont ceux qui sont orientés vers le bas.

Dans ces conditions, toute sollicitation artificielle du piston 12 vers le bas tend à augmenter la pression hydraulique régnant dans la chambre A et appliquée sur l'anneau 3 et la force d'inertie I due aux masses mobiles s'ajoute alors à ladite force hydraulique H au lieu de venir en déduction de celle-ci comme dans les réalisations de l'art antérieur.

Il n'existe donc plus de zéro d'efficacité : on peut engendrer une atténuation active efficace pour n'importe quelle valeur de la fréquence des contre-vibrations imposées au piston.

Cet effet bénéfique peut être multiplié en multipliant le nombre des capsules étanches 19 remplies d'air.

Dans le mode de réalisation schématisé sur la figure 3, on a prévu deux telles capsules superposées 19₁ et 19₂ délimitées respectivement par une paroi rigide supérieure 20₁,20₂ solidaire de l'armature 3 et par un piston inférieur 12₁,12₂ solidaire de la tige 13 de l'actionneur électrique 14 et raccordé à la paroi rigide correspondante par un joint annulaire étanche.

Chaque piston délimite supérieurement un espace C₁,C₂ rempli de liquide et mis en libre communication avec la portion principale supérieure de la chambre A : à cet effet, les deux parois rigides 20₁ et 20₂ en forme de disque sont reliées à la cloison 8 par l'intermédiaire d'une jupe cylindrique 25 perforée par de larges trous 26.

La tige 13 traverse la paroi supérieure 20₁ de la capsule inférieure 19₁ d'une manière étanchée à l'aide d'un joint 24.

Les poches D₁ et D₂ intérieures aux deux capsules sont mises toutes les deux à l'air libre à travers un canal 27 évidé axialement dans la tige 13.

Avec un tel mode de réalisation, tout déplacement de la tige 13 vers le bas se traduit par une poussée commune des deux pistons 12₁ et 12₂ sur le liquide contenu dans les espaces C₁ et C₂, c'est-à-dire en définitive sur le liquide contenu dans la chambre de travail A.

Comme exposé ci-dessus, dans les réalisations qui viennent d'être décrites, la portion, de la force globale appliquée sur l'armature 3 par chaque déplacement du piston 12, qui est due à l'inertie des masses mobiles, ne constitue plus un inconvénient susceptible de conduire à un zéro d'efficacité.

On peut donc parfaitement envisager de renforcer cette composante inertielle.

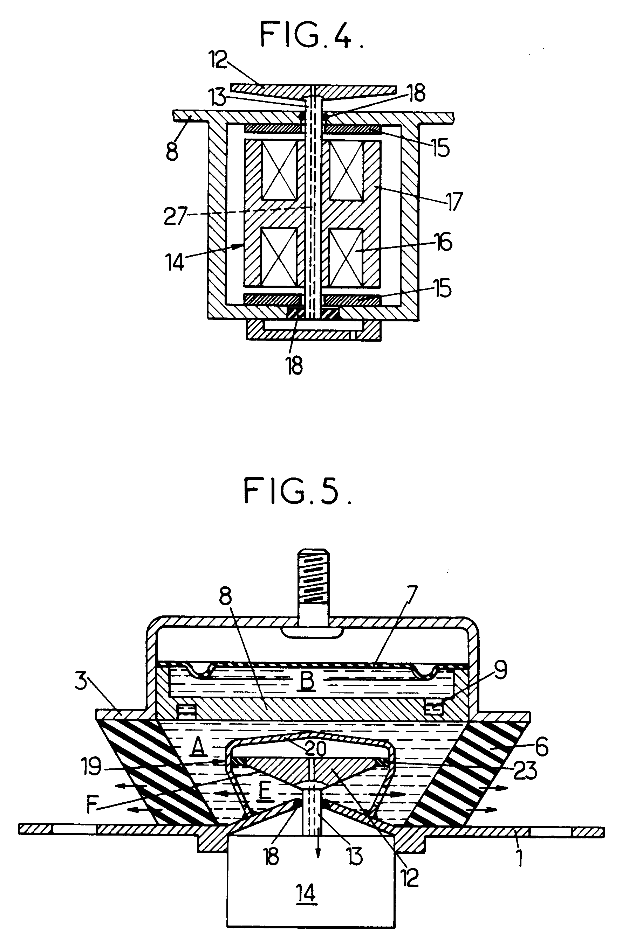

La variante schématisée sur la figure 4 permet d'obtenir un tel renforcement sans alourdir en rien le support.

Dans cette variante, on a solidarisé avec la tige 13 du piston 12, non plus simplement un élément ferromagnétique servant à refermer un circuit magnétique tel que l'élément désigné par la référence 15 sur la figure 1, mais une portion conséquente de ce circuit lui-même, comprenant l'essentiel de sa carcasse 17 et même les bobines électriques d'excitation 16 : dans ce cas, ce sont les éléments ferromagnétiques 15 relativement légers servant à refermer le circuit magnétique qui sont fixes et solidaires de l'armature 3 ou plus précisément de la cloison 8.

Dans la variante illustrée sur la figure 5, l'organe excitateur 14 et le piston 12 sont montés sur la tête 1 du dispositif au lieu de l'être sur l'armature annulaire 3 : dans ce cas, le montage est renversé par rapport au précédent en ce sens que la tête 1 se trouve en bas et l'armature annulaire 3, en haut du dispositif, la paroi annulaire 6, encore tronconique étant alors évasée vers le haut.

On retrouve ici la capsule 19 remplie d'air délimitée par une paroi rigide supérieure 20 solidaire de la tête 1 et par le piston 12, qui est encore disposé au-dessous de la paroi 20 et est raccordé à celle-ci par un joint périphérique étanche et souple 23.

En outre, la face inférieure F du piston 22 présente une forme tronconique convergente vers le bas et la base de la chambre de travail A est délimitée par une face supérieure tronconique convergente vers le haut, de sorte que les deux faces en regard délimitent entre elles un espace annulaire E divergeant radialement vers l'extérieur, et la base rétrécie de la paroi annulaire 6 est disposée au niveau de cet espace E.

De la sorte, les déplacements radiaux du liquide contenu dans l'espace E, qui sont dus aux déplacements verticaux du piston 22, sont facilités, et ils se traduisent finalement par des déformations horizontales de la base de la paroi 6.

En d'autres termes, les abaissements du piston 12 ne se traduisent plus par des refoulements de liquide vers le haut dans la chambre de travail A et la performance du dispositif en est améliorée : en effet, même si la masse du volume liquide déplacé est plus petite que celle de l'équipage mobile (piston et tige) il est préférable que la première ne vienne pas en déduction de la seconde dans l'estimation globale des "masses mobiles" déplacées verticalement.

Bien entendu, cet avantage dû au fait que la base de la paroi annulaire 6 s'étend plus bas que le piston, peut être également obtenu dans le cas de la figure 1 en aménageant le dispositif en conséquence.

En suite de quoi, et quel que soit le mode de réalisation adopté, on obtient un dispositif antivibratoire hydraulique dont la constitution et le fonctionnement résultent suffisamment de ce qui précède.

Ce dispositif présente un certain nombre d'avantages par rapport à ceux antérieurement connus et notamment celui de rendre possible une atténuation active à toutes les fréquences envisageables, avec des dispositifs antivibratoires montés dans le même sens que les dispositifs comparables usuels.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes, notamment celles où l'excitateur 14 serait logé lui-même à l'intérieur d'une capsule (19,19₁,19₂) au lieu d'être monté à l'extérieur de cette capsule, comme dans les modes de réalisation illustrés.

## Revendications

1. Dispositif antivibratoire hydraulique à interposer entre deux éléments rigides (10,11) comprenant une armature rigide annulaire (3) solidarisable avec l'un des deux éléments, une tête rigide (1) solidarisable avec l'autre élément, une paroi annulaire en élastomère (6) offrant une bonne résistance à la compression axiale et reliant de façon étanche l'armature (3) à la tête (1), une membrane flexible étanche (7) portée par l'armature annulaire (3) et définissant avec elle, avec la paroi (6) et avec la tête (1), une enceinte étanche, une cloison rigide et étanche (8) portée par l'armature à l'intérieur de l'enceinte et séparant cette dernière en une chambre de travail (A), du côté de la paroi et une chambre de compensation (B), du côté de la membrane, un passage étranglé (9) faisant communiquer en permanence les deux chambres entre elles, une masse de liquide remplissant les deux chambres et le passage étranglé, un piston rigide (12) monté sur l'une des deux pièces constituées par l'armature et par la tête -pièce appelée "première pièce" ci-après-, de façon à pouvoir se déplacer avec une amplitude de débattement limitée par rapport à cette première pièce, et un organe excitateur électrique (14) monté sur ladite première pièce et propre à appliquer sur le piston des forces alternatives tendant à atténuer les vibrations transmises de la seconde à la première pièce, caractérisé en ce qu'il comprend, immergée dans la chambre de travail, une capsule étanche (19) remplie d'air essentiellement délimitée par une paroi rigide (20) solidaire de la première pièce et par le piston (12) lui-même, dont le pourtour est raccordé à ladite paroi rigide à l'aide d'un joint annulaire étanche et déformable (23), ledit piston (12) étant disposé axialement entre ladite paroi rigide (20) et une autre partie (8) de la première pièce avec interposition d'un espace (C,E) rempli de liquide faisant partie de la chambre de travail (A).

2. Dispositif selon la revendication 1, caractérisé en ce que la capsule (19) est mise à l'air libre.

3. Dispositif selon l'une quelconque des précédentes revendications, caractérisé en ce que la paroi rigide de la capsule comprend une portion pleine centrale (20) entourée par une entretoise annulaire rigide (21,25) perforée solidaire de la première pièce (3,1) et en ce que la zone annulaire de liaison entre la portion centrale et l'entretoise est raccordée de façon étanche au pourtour du piston (12), alors constitué lui-même par un plateau rigide plein.

4. Dispositif selon la revendication 3, caractérisé en ce que l'entretoise annulaire est une rondelle plate (21).

5. Dispositif selon la revendication 3, caractérisé en ce que l'entretoise annulaire est une bague cylindrique (25).

6. Dispositif selon l'une quelconque des précédentes revendications, caractérisé en ce qu'il comprend, en plus de la capsule ci-dessus (19₂), au moins une autre capsule (19₁) disposée entre la première et ladite autre partie de la première pièce avec interposition d'un espace (C₂) rempli de liquide faisant partie de la chambre de travail (A), chaque autre capsule (19₁) étant délimitée par une autre paroi rigide (20₁) solidaire de la première pièce (3) et par un autre piston (12₁) solidaire du premier piston (12₂), dont le pourtour est raccordé à ladite autre paroi rigide (20₁) à l'aide d'un autre joint annulaire étanche et déformable, ledit autre piston (12₁) étant disposé axialement entre ladite autre paroi rigide (20₁) et ladite autre partie de la première pièce avec interposition d'un espace (C₁) rempli de liquide faisant partie de la chambre de travail.

7. Dispositif selon l'une quelconque des précédentes revendications, caractérisé en ce que l'organe excitateur électrique (14) est d'un type électromagnétique à réductance variable et en ce que le piston (12) est solidarisé avec des portions relativement lourdes (16,17) des circuits magnétiques constituant cet excitateur, portions comprenant notamment les bobines d'excitation électrique.

8. Dispositif selon l'une quelconque des précédentes revendications, caractérisé en ce que le piston (12) est disposé au-dessus de l'organe excitateur (14) et en ce que la face inférieure (F), du piston, qui est en contact avec le liquide de la chambre de travail, présente une forme généralement tronconique convergente vers le bas.

9. Dispositif selon l'une quelconque des précédentes revendications, caractérisé en ce que la base de la paroi élastique annulaire (6) s'étend plus bas que le piston (12).

10. Dispositif selon l'une quelconque des précédentes revendications, caractérisé en ce que l'organe excitateur électrique (14) est logé dans la capsule (19).

## Claims

1. Hydraulic anti-vibration device for placing between two rigid elements (10, 11), comprising a rigid annular frame (3) suitable for securing to one of the two elements, a rigid head (1) suitable for securing to the other element, an annular elastomer wall (6) providing good resistance to axial compression and interconnecting the frame (3) and the head (1) in sealed manner, a sealed flexible membrane (7) carried by the annular frame (3) and co-operating with it, with the wall (6), and with the head (1) to define a sealed enclosure, a rigid and sealed partition (8) carried by the frame inside the enclosure and dividing the enclosure into a working chamber (A) on the side of the wall, and a compensation chamber (B) on the side of the membrane, a throttled passage (9) putting the two chambers permanently into communication with each other, a mass of liquid filling the two chambers and the throttled passage, a rigid piston (12) mounted on one of the two pieces constituted by the frame and by the head -which piece is referred to below as the "first piece"-, so as to be capable of moving with limited amplitude relative to said first piece, and an electrical exciter member (14) mounted on said first piece and suitable for applying reciprocating forces on the piston tending to attenuate the vibrations transmitted from the second piece to the first piece, characterized in that it comprises, immersed in the working chamber, a sealed capsule (19) filled with air and essentially defined by a rigid wall (20) secured to the first piece and by the piston (12) itself, the periphery thereof being connected to said rigid wall by means of a deformable sealed annular gasket (23), said piston (12) being disposed axially between said rigid wall (20) and another portion (8) of the first piece with a liquid-filled space (C, E) forming a portion of the working chamber (A) being interposed therebetween.

2. Device according to claim 1, characterized in that the capsule (19) is connected to the outside atmosphere.

3. Device according to any one of the preceding claims, characterized in that the rigid wall of the capsule includes a central solid portion (20) surrounded by a perforated rigid annular spacer (21, 25) secured to the first piece (3, 1) and in that the annular connection zone between the central portion and the spacer is connected in sealed manner to the periphery of the piston (12), which is itself then constituted by a solid rigid plate.

4. Device according to claim 3, characterized in that the annular spacer is a flat washer (21).

5. Device according to claim 3, characterized in that the annular spacer is a cylindrical ring (25).

6. Device according to any one of the preceding claims, characterized in that, in addition to the above capsule (19₂), it includes at least one other capsule (19₁) disposed between the first capsule and said other portion of the first piece with a liquid-filled space (C₂) forming a portion of the working chamber (A) being interposed therebetween, each other capsule (19₂) being defined by another rigid wall (20₁) secured to the first piece (3) and by another piston (12₁) secured to the first piston (12₂), the periphery thereof being connected to said other rigid wall (20₁) by means of another sealed and deformable annular gasket, said other piston (12₁) being disposed axially between said other rigid wall (20₁) and said other portion of the first piece, with a liquid-filled space (C₁) forming a portion of the working chamber being interposed therebetween.

7. Device according to any one of the preceding claims, characterized in that the electrical exciter member (14) is of a variable reluctance electromagnetic type and in that the piston (12) is secured to relatively heavy portions (16, 17) of the magnetic circuits constituting said exciter, which portions include, in particular, electrical excitation coils.

8. Device according to any one of the preceding claims, characterized in that the piston (12) is disposed above the exciter member (14) and in that the bottom face (F) of the piston that is in contact with the liquid of the working chamber is generally frustoconical in shape, converging downwards.

9. Device according to any one of the preceding claims, characterized in that the base of the annular elastic wall (6) extends down further than the piston (12).

10. Device according to any one of the preceding claims, characterized in that the electrical exciter member (14) is housed in the capsule (19).

## Patentansprüche

1. Hydraulische Antischwingungsvorrichtung zum Einbau zwischen zwei starren Elementen (10, 11) bestehend aus folgenden Teilen: einer starren, ringförmigen Armatur (3), die an einem der beiden Elemente anbringbar ist, einem starren Kopfstück (1), das an dem anderen Element befestigbar ist, einer ringförmigen Wandung (6) aus elastomerem Material, die einen beträchtlichen Widerstand gegen Druckbelastung in axialer Richtung aufweist und die die Armatur (3) dicht mit dem Kopfstück (1) verbindet, einer dichten, biegsamen Membran (7), die durch die ringförmige Armatur (3) gehalten wird und mit dieser, mit der Wandung (6) und mit dem Kopfstück (1) einen dichten Raum begrenzt, einer starren und dichten Trennwand (8), die durch die Armatur im Inneren des Raumes gehalten wird und diesen in eine Arbeitskammer (A) auf der Seite der Wandung und eine Kompensationskammer (B) auf der Seite der Membran unterteilt, einem verengten Durchgang (9), der die beiden Kammern dauernd miteinander verbindet, einer flüssigen Masse, die die beiden Kammern und den verengten Durchgang ausfüllt, einem starren Kolben (12), der an einem der beiden Werkstücke - nachstehend "erstes Werkstück" genannt - befestigt ist, die durch die Armatur und das Kopfstück gebildet werden, wobei die Befestigung so erfolgt, daß sich der Kolben mit einer begrenzten Schwingungsamplitude in bezug auf das erste Werkstück verschieben kann und einem elektrischen Erreger (14), der an dem ersten Werkstück befestigt ist und an den Kolben wechselweise Kräfte anlegen kann, die dazu neigen, die von dem zweiten auf das erste Werkstück übertragenen Schwingungen zu dämpfen, dadurch gekennzeichnet, daß die Vorrichtung eine in die Arbeitskammer eingetauchte, mit Luft gefüllte dichte Kapsel (19) enthält, die im wesentlichen durch eine starre Wandung (20), die mit dem ersten Werkstück verbunden ist und durch den Kolben (12) selbst begrenzt wird, dessen Umfang mit der erwähnten starren Wandung mittels einer ringförmigen dichten und deformierbaren Abdichtung (23) verbunden ist, wobei der Kolben (12) in axialer Richtung zwischen der erwähnten starren Wandung (20) und einem anderen Teil (8) des ersten Werkstückes unter Einhalten eines Zwischenraumes (C, E) angeordnet ist, der mit Flüssigkeit gefüllt ist und sich auch in der Arbeitskammer (A) befindet.

2. Vorrichtung nach Anspruch 1, dadurch gekennzeichnet, daß die Kapsel (19) mit der Atmosphäre in Verbindung steht.

3. Vorrichtung nach einem der vorhergehenden Ansprüche, dadurch gekennzeichnet, daß die starre Wandung der Kapsel einen mittleren, massiven Abschnitt (20) enthält, der von einem starren, ringförmigen, mit Bohrungen versehenen Verbindungsteil (21, 25) umgeben ist, das an dem ersten Werkstück (3,1) angebracht ist und daß der ringförmige Übergangsbereich zwischen dem mittleren Abschnitt und dem Verbindungsteil dicht mit dem Umfang des Kolbens (12) verbunden ist, der dann seinerseits aus einer ebenen, starren Platte gebildet wird.

4. Vorrichtung nach Anspruch 3, dadurch gekennzeichnet, daß das ringförmige Verbindungsteil aus einer ebenen Ringscheibe (21) besteht.

5. Vorrichtung nach Anspruch 3, dadurch gekennzeichnet, daß das ringförmige Verbindungsteil aus einem zylindrischen Ring (25) besteht.

6. Vorrichtung nach einem der vorhergehenden Ansprüche, dadurch gekennzeichnet, daß sie außer der oben erwähnten Kapsel (19₂) wenigstens eine weitere Kapsel (19₁) enthält, die zwischen der ersten und dem erwähnten anderen Teil des ersten Werkstückes unter Einhalten eines Zwischenraumes (C₂) angeordnet ist, der mit Flüssigkeit gefüllt ist und sich in der Arbeitskammer (A) befindet, wobei jede weitere Kapsel (19₁) durch eine weitere starre Wandung (20₁), die mit dem ersten Werkstück (3) verbunden ist, und durch einen weiteren Kolben (12₁) begrenzt wird, der fest mit dem ersten Kolben (12₂) verbunden ist und dessen Umfang mit der erwähnten weiteren starren Wandung (20₁) mittels einer weiteren dichten und deformierbaren ringförmigen Abdichtung verbunden ist und der weitere Kolben (12₁) axial zwischen der weiteren starren Wandung (20₁) und dem anderen Teil des ersten Werkstückes unter Einhalten eines Zwischenraumes (C₁) angeordnet ist, der mit Flüssigkeit gefüllt ist und der auch in der Arbeitskammer vorhanden ist.

7. Vorrichtung nach einem der vorhergehenden Ansprüche, dadurch gekennzeichnet, daß der elektrische Erreger (14) ein elektromagnetischer Erreger mit veränderbarer Reluktanz ist und daß der Kolben (12) mit relativ schweren Abschnitten (16, 17) der Magnetkreise verbunden ist, die den Erreger bilden, wobei die Abschnitte insbesondere die elektrischen Erregerspulen enthalten.

8. Vorrichtung nach einem der vorhergehenden Ansprüche, dadurch gekennzeichnet, daß der Kolben (12) oberhalb des Erregers (14) angeordnet ist, und daß die untere Fläche (F) des Kolbens, die in Kontakt mit der Flüssigkeit ist, die sich in der Arbeitskammer befindet, eine allgemein konische, nach unten konvergierende Form hat.

9. Vorrichtung nach einem der vorhergehenden Ansprüche, dadurch gekennzeichnet, daß die Basis der ringförmigen elastischen Wandung (6) sich weiter nach unten erstreckt als der Kolben (12).

10. Vorrichtung nach einem der vorhergehenden Ansprüche, dadurch gekennzeichnet, daß der elektrische Erreger (14) in der Kapsel (19) angeordnet ist.
